# EUROPÄISCHE PATENTSCHRIFT

(11) **EP 2 528 980 B1**
(45) Veröffentlichungstag und Bekanntmachung des Hinweises auf die Patenterteilung: **09.10.2013**
(21) Anmeldenummer: 10704498.4
(22) Anmeldetag: 28.01.2010
(51) Int. Cl.: C08G 18/62, C08G 18/72, C08G 18/76, C08G 18/28, C09D 175/04, C09D 177/06, C08G 18/32, C08L 75/02, C08L 77/06, C09D 175/02, C09D 177/02, C09D 177/00

(54) **HARNSTOFF- UND AMIDKOMPONENTEN ENTHALTENDE LACKZUBEREITUNG**
COATING PREPARATION CONTAINING UREA COMPONENTS AND AMIDE COMPONENTS
PRÉPARATION DE VERNIS CONTENANT DES COMPOSANTS AMIDE ET URÉE

(43) Veröffentlichungstag der Anmeldung: 05.12.2012
(73) Patentinhaber: BYK-Chemie GmbH, 46483 Wesel (DE)
(72) Erfinder: BÜHNE, Sylvia, 47198 Duisburg (DE); OMEIS, Jürgen, 46286 Dorsten-Lembeck (DE); LEUTFELD, Daniela, 46485 Wesel (DE); EBERHARDT, Marc, 46485 Wesel (DE); JACOBS, Berthold, 48734 Reken (DE)
(86) Internationale Anmeldenummer: PCT/EP2010/000505
(87) Internationale Veröffentlichungsnummer: WO 2011/091812

(56) Entgegenhaltungen:
- EP-A2- 0 528 363
- EP-A2- 1 048 681
- EP-A2- 1 832 573

## Beschreibung

Die Erfindung betrifft eine Lackzubereitung sowie ein lackiertes Substrat.

Um die Rheologie von Beschichtungsmitteln zu steuern, werden Rheologiesteuerungsmittel auf unterschiedlicher chemischer Basis eingesetzt. Bekannte Rheologiesteuerungsmittel sind organisch modifizierte Bentonite, Kieselsäuren, hydriertes Rizinusöl oder Polyamidwachse. Diese Stoffe sind meist trockene Feststoffe, die mittels Lösemitteln und Scherkräften zu einem Halbfabrikat aufgeschlossen bzw. durch gezielte Temperatursteuerung in das flüssige Beschichtungssystem eingebracht werden müssen. Werden entsprechende Temperaturen nicht eingehalten, treten im fertigen Beschichtungssystem Kristallite auf, die zu Fehlern in der Beschichtung führen können. Beispielsweise sind in der EP-A 1 832 573 biurethaltige Polyamide beschrieben, die in gelöster Form als flüssige Rheologiesteuerungsmittel für Beschichtungsmittel eingesetzt werden. Werden Poly- oder Oligo-Amide als Rheologiesteuerungsmittel in einem Beschichtungsmittel eingesetzt, zeigt diese Formulierung verschiedene anwendungstechnische Nachteile: Es wird eine zunehmend schlechter werdende Wirkung mit steigender Temperatur beobachtet. So kann beispielsweise das Absetzen von Pigmenten in einer fertigen Lackzubereitung nicht verhindert werden, wenn diese Lackzubereitung höheren Temperaturen bei der Lagerung ausgesetzt ist. Ebenso kann ein Ablaufen der Lackzubereitung nicht verhindert werden, wenn diese bei höheren Umgebungstemperaturen oder auf warme Untergründe appliziert wird. Außerdem wird ein Ablaufen des Beschichtungsmaterials und damit eine Läuferbildung beobachtet, wenn die Lackzubereitung thermisch ausgehärtet bzw. forciert getrocknet wird.

Der vorliegenden Erfindung lag somit die Aufgabe zugrunde, Lackzubereitungen bereitzustellen, welche die vorstehend erwähnten Nachteile nicht aufweisen.

Die Lösung dieser Aufgabe ist eine Lackzubereitung enthaltend
i) 0,1 bis 9,0 Gew.% einer Harnstoffkomponente (A),
ii) 0,1 bis 5,0 Gew. % einer Amidkomponente (B),
iii) 10,0 bis 90,0 Gew.% einer sich jeweils von der Harnstoffkomponente (A) und von der Amidkomponente (B) unterscheidenden Bindemittelkomponente (C) sowie
iv) 0 bis 85,0 Gew.% einer Lösungsmittelkomponente (D),
wobei die Summe der Anteile der Harnstoffkomponente (A) und der Amidkomponente (B) 0,3 bis 10,0 Gew.% sowie die Summe der Anteile der Bindemittelkomponente (C) und der Lösungsmittelkomponente (D) 80,0 bis 99,7 Gew.% beträgt, sowie die Amidkomponente (B) sich zusammensetzt aus Verbindungen, die jeweils mindestens zwei Amidbindungen aufweisen, an deren Stickstoffatom jeweils mindestens ein Wasserstoffatom gebunden ist.

Die Harnstoffkomponente (A) besteht aus Verbindungen, welche jeweils mindestens eine Harnstoffgruppe und jeweils weniger als zwei Amidbindungen enthalten, an deren Stickstoffatom jeweils mindestens ein Wasserstoffatom gebunden ist.

Die Amidkomponente (B) setzt sich zusammen aus Verbindungen, die jeweils mindestens zwei Amidbindungen aufweisen, an deren Stickstoffatom jeweils mindestens ein Wasserstoffatom gebunden ist. Erfindungsgemäß sollen somit keine Verbindungsspezies der Amidkomponente (B) zugerechnet werden, welche jeweils nur eine Amidbindung pro Molekül aufweisen. Im Übrigen kann gesagt werden, daß derartige Verbindungen normalerweise deutlich weniger gut wirksam sind (im Vergleich zu Verbindungen mit jeweils mindestens zwei Amidbindungen).

Die Bindemittelkomponente (C) setzt sich zusammen aus jeweils nichtflüchtigen anorganischen und/ oder bevorzugt organischen Verbindungen, die sich jeweils als Bindemittel für Lacke eignen. Verbindungen, die der Harnstoffkomponente (A) oder der Amidkomponente (B) zuzurechnen sind, sollen definitionsgemäß nicht als Verbindungen der Bindemittelkomponente (C) angesehen werden.

Die Lösungsmittelkomponente (D) besteht aus unter Trocknungs- und Härtungsbedingungen für Lacke flüchtigen Lösungsmitteln, welche jeweils als Lösungsmittel für Lacke geeignet sind. Verbindungen, die der Harnstoffkomponente (A) oder der Amidkomponente (B) oder der Bindemittelkomponente (C) zugehören, können jeweils nicht der Lösungsmittelkomponente (D) zugerechnet werden.

Die erfindungsgemäße Lackzubereitung zeigt deutliche anwendungstechnische Vorteile gegenüber bereits bekannten Lackzubereitungen, welche insbesondere auch bei höheren Temperaturen zu verzeichnen sind. In diesem Zusammenhang sind hervorzuheben die besonders guten Verträglichkeiten der beiden enthaltenden Rheologiesteuerungsmittel (A) und (B) in Klarlacken, die Verbesserung des Ablaufverhaltens der Lackzubereitung während der Lackierung, positive Ergebnisse bezüglich Glanz bzw. Glanzschleier des entstehenden Lacks, sowie eine Verbesserung der Lagerstabilität der Lackzubereitung, welche insbesondere dann festgestellt wird, wenn Pigmente und Füllstoffe enthalten sind. Offenbar werden diese positiven Effekte insbesondere durch die geeignete Kombination der Komponenten (A) und (B) bewirkt.

In einer bevorzugten Ausführungsform der Erfindung beträgt die Summe der Anteile der Harnstoffkomponente (A) und Amidkomponente (B) 0,4 bis 6 Gew.%, bevorzugt 0,5 bis 2,0 Gew.% sowie die Summe der Anteile der Bindemittelkomponente (C) und der Lösungsmittelkomponente (D) 85,0 bis 99,5 Gew.%, bevorzugt 90,0 bis 99,5 Gew.%, beträgt.

Meist liegt die Amidkomponente (B) in Form von Verbindungen (B') vor, welche jeweils ein Molekulargewicht von 300 bis 50.000 und jeweils 2 bis 300 Amidgruppen aufweisen, mit der Maßgabe, daß jeweils der Gewichtsanteil der in den Amidgruppen enthaltenen Heteroatome bezogen auf das Molekulargewicht der jeweiligen Verbindung (B') 0,2 bis 25,0 % beträgt (Summe der Atomgewichte der relevanten Heteroatome bezogen auf das Molekülgewicht) und an den Stickstoffatomen der Amidgruppen jeweils mindestens ein Wasserstoffatom gebunden ist.

Als Heteroatome sollen Atome, welche nicht als Kohlenstoff oder Wasserstoff vorliegen, verstanden werden.

Bezüglich der anzuwendenden Bestimmungsmethode des Molekulargewichts (insbesondere der Verbindungen (B') sowie der nachstehend erwähnten Verbindungen (A')) soll folgendes definiert werden: Das Molekulargewicht wird mittels Gelpermeationschromatographie (GPC) bestimmt - gemäß der DIN 55672 Teil 2 (als Eluent wird eine Lösung von Lithiumbromid (Gehalt 5 g/L) in Dimethylacetamid verwendet. Zur Kalibrierung werden eng verteilte, linear aufgebaute Polymethylmethacrylat-Standards mit Molekulargewichten zwischen 1000000 und 102 verwendet. Die Temperatur des gesamten GPC-Systems (Injektor, Probenteller, Detektoren und Säulen) beträgt 80°C).

Häufig weisen die Verbindungen (B') jeweils ein Molekulargewicht von 300 bis 30.000 und jeweils 2 bis 150 Amidgruppen auf, mit der Maßgabe, daß jeweils der Gewichtsanteil der in den Amidgruppen enthaltenen Heteroatome bezogen auf das Molekulargewicht der jeweiligen Verbindungen (B') 2 bis 20% beträgt (Summe der Atomgewichte der relevanten Heteroatome bezogen auf das Molekülgewicht) und an den Stickstoffatomen der Amidgruppen jeweils mindestens ein Wasserstoffatom gebunden ist.

Die Amidgruppen der Verbindungen B' sind beispielweise dadurch erhältlich, dass Carbonsäuren, bevorzugt Mono- oder Dicarbonsäuren und/ oder Dicarbonsäureanhydride mit Aminen, bevorzugt Mono- oder Diamine, nach üblichen (dem Fachmann bekannten) Verfahren derat kondensiert werden, daß sich pro Molekül mindestens zwei Amidgruppen ausbilden. Bei den Aminen handelt es sich vorzugsweise um aliphatische, aromatische und araliphatische primäre Amine, wie z.B. Ethylendiamin, Neopentandiamin, 1,2- und 1,3-Propandiamin, 1,6-Hexamethylendiamin, 1,8-Octamethylendiamin, 1,10-Decamethylendiamin, 1,12-Dodecamethylendiamin, Cyclohexyldiamin, 4,4'-Diaminodicyclohexylmethan, 3,3'-Dimethyl-4,4'-Diaminodicyclohexylmethan, Isophorondiamin, 4,7-Dioxadecan-1,10-diamin, 4,7,10-Trioxadecan-1,12-diamin, Polyoxyalkylendiamine, welche Ethylenoxid- und/ oder Propylenoxid-Gruppen, statistisch oder blockweise angeordnet, enthalten (bekannt beispielsweise unter den Markennamen Jeffamin D 230, D 400, D 2000, D 4000 und Jeffamin ED 600, ED 900, ED 2003 und DER 148 von Huntsman) mit einem gewichtsmittleren Molekulargewicht zwischen 148 und 4000 g/mol (Hersteller-Angabe), Polytetrahydrofurandiamine wie Bis(3-Aminopropyl)polytetrahydrofuran 350, 750, 1100 und 2100 (die Zahlen geben das ungefähre Molekulargewicht an), para- und meta-Xylylendiamin; 4,4-Diamino-diphenylmethan, 3,3-Dimethyl-4,4-diamino-diphenylmethan, isomere Phenylendiamine oder isomere Xylylendiamine. Ebenfalls können Amine des Typs H₂N-R-NR-R-NH₂ verwendet werden, wobei R unabhängig für (C₁-C₁₈)-Alkyl oder (C₁-C₄)-Alkoxy steht. Ein Beispiel hierfür ist N,N'-Bis-(3-aminopropyl)methylamin. Die Diamine können auch als Carbonatverbindungen eingesetzt werden, die bei der Kondensationsreaktion mit den Polycarbonsäuren unter Wasserabscheidung und CO₂-Abspaltung zu den Amidgruppierungen reagieren. Die genannten Verbindungen können einzeln oder in Mischungen eingesetzt werden.

Im Falle der entsprechend eingesetzten Carbonsäuren handelt es sich vorzugsweise um aliphatische, cycloaliphatische oder aromatische, lineare oder verzweigte, gesättigte oder ungesättigte Carbonsäuren mit wenigstens 2, besonders bevorzugt 3 bis 40 C-Atomen. Beispiele solcher Polycarbonsäuren sind Adipinsäure, Oxalsäure, Bernsteinsäure, Glutarsäure, Pimelinsäure, Korksäure, Sebacinsäure, Azelainsäure, Undecandisäure, 1,11-Undecandicarbonsäure, Dodecandisäure, Hexandicarbonsäure, Dokosandisäure, Maleinsäure, Fumarsäure, Terephthalsäure oder Isophthalsäure. Die Säuren können alleine oder in Mischungen eingesetzt werden. Außerdem ist es möglich, Säureanhydride wie Maleinsäureanhydrid, Glutarsäureanhydrid, Phthalsäureanhydrid und Bernsteinsäureanhydrid, welche gegebenenfalls mit Alkyl- oder Alyklengruppen modifiziert sind, wie z.B. Dodecenylbernsteinsäureanhydrid, zu verwenden. Polymere Polycarbonsäuren wie z.B. die Dicarbonsäure des Polybuatdiens können ebenso verwendet werden wie hydroxyfunktionelle Polycarbonsäuren wie z.B. Weinsäure, Zitronensäure und Hydroxyphthalsäure. Oxydicycarbonsäuren, wie 3,6,9-Trioxyundecansäure und Polyglykoldisäure, können ebenfalls eingesetzt werden. Dimerisierte Fettsäuren (dem Fachmann als Dimersäuren bekannt) mit einer Kohlenstoffkettenlänge von 36 C-Atomen sind ganz besonders bevorzugt. Diese Dimersäuren können sowohl einen geringen Monomergehalt (üblicherweise < 8 Gewichtsprozent), als auch einen Anteil von nicht mehr als 25 Gewichtsprozent an Trimersäure aufweisen. Bei den Moncarbonsäuren handelt es sich um gesättigte, einfach bis mehrfach ungesättigte, lineare oder verzweigte Carbonsäuren wie Essigsäure, Propionsäure, Buttersäure, Isobuttersäure, Valeriansäure, Isovaleriansäure, Capronsäure, Önanthsäure, Caprylsäure, Perlargonsäure, Caprinsäure, Undecansäure, Laurinsäure, Tridecansäure, Myristinsäure, Pentadecansäure, Palmitinsäure, Margarinsäure, Stearinsäure, Nonandecansäure, Arachinsäure, Behensäure, Lignocerinsäure, Cerotinsäure, Melissinsäure, Lauroleinsäure, Myristoleinsäure, Palmitoleinsäure, Petrosilinsäure, Ölsäure, Elaidinsäure, Vaccensäure, Erucasäure, Linolsäure, Linolensäure, Arachidonsäure, Clupanodensäure, Ricinensäure, alpha-Elaeostearinsäure, alpha-Parinsäure, Kokosölfettsäure Palmkernölfettsäure, Kokos/Palmkernölfettsäure, Palmölfettsäure, Cottonölfettsäure, Erdnussölfettsäure, Sojaölfettsäure, Sonnenblumenölfettsäure, Rapsölfettsäure und Talgfettsäure. Ebenso finden Ketocarbonsäuren, wie Licansäure als auch aromatische Monocarbonsäuren wie z.B. Benzoesäure, entsprechend Einsatz. Als Vertreter der Hydroxycarbonsäuren seien z.B. Glykolsäure, 5-Hydroxyvaleriansäure, 6-Hydroxycapronsäure, Ricinolfettsäure, 12-Hydroxystearinsäure, 12-Hydroxydodecansäure, 5-Hydroxydodecansäure, 5-Hydroxydecansäure oder 4-Hydroxydecansäure genannt. Alle genannten Carbonsäuren und Anhydride können einzeln oder in Mischungen eingesetzt werden.

Nicht selten enthalten die Verbindungen (B') jeweils mindestens eine lineare oder verzweigte C₁₁-C₃₆ Alkylengruppe.

In der Regel liegt die Harnstoffkomponente (A) in Form von Verbindungen (A') vor, welche jeweils aufweisen ein Molekulargewicht von 500 bis 300.000 und jeweils 1 bis 400 Harnstoffgruppen, mit der Maßgabe, daß jeweils der Gewichtsanteil der in den Harnstoffgruppen enthaltenen Heteroatome bezogen auf das Molekulargewicht der jeweiligen Verbindung (A') 0,2 bis 25,0 % beträgt (Summe der Atomgewichte der relevanten Heteroatome bezogen auf das Molekülgewicht).

Meist weisen die Verbindungen (A') jeweils ein Molekulargewicht von 500 bis 60.000 und jeweils 2 bis 150 der Harnstoffgruppen auf, mit der Maßgabe, daß jeweils der Gewichtsanteil der in den Harnstoffgruppen enthaltenen Heteroatome bezogen auf das Molekulargewicht der jeweiligen Verbindung (A') 2 bis 25 % beträgt (Summe der Atomgewichte der relevanten Heteroatome bezogen auf das Molekülgewicht).

Die Harnstoffgruppen der Verbindungen A' sind beispielsweise dadurch erhältlich, dass aliphatische, cycloaliphatische, aromatische oder arylaliphatische Mono-, Di- oder Polyisocyanate alleine oder in Mischungen mit geeigneten Mono- oder Diaminen so zur Reaktion gebracht werden, dass sich mindestens 2 Harnstoffgruppen pro Molekül bilden.

Spezielle Beispiele solcher Diisocyanate sind 1,4-Tetramethylendiisocyanat, 1,6-Hexamethylendiisocyanat, 2,2,4-Trimethyl-1,6-hexamethylendiisocyanat, 1,10-Decamethylendiisocyanat, 1,4-Cyclohexandiisocyanat, Isophorondiisocyanat, p-Phenylendiisocyanat, m-Phenylendiisocyanat, 2,6-Toluendiisocyanat, 2,4-Toluendiisocyanat und deren Mischungen, p- und m-Xylylendiisocyanat, 4,4'-Diisocyanatodicyclohexylmethan, 3,3'-Dimethyl-4,4'-Bisphenylendiisocyanat, 3,3'-Dimethyl-diisocyanatodicyclohexylmethan, die Isomerenmischungen 2,4'- und 4,4'-Diisocyanatodiphenylmethan und C₃₆-Dimerdiisocyanat. Bevorzugte Isocyanate sind die Biuret-Dimere und die Isocyanurat-Trimere der vorgenannten Diisocyanate. Besonders bevorzugte Isocyanate sind Hexamethylen-1,6-diisocyanat, 2,6-Toluendiisocyanat bzw. 2,4-Toluendiisocyanat und deren Mischungen, deren Biuret-Dimere und/oder Isocyanurat-Trimere. In einer weiteren Ausführungsform sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Geeignete Polyole sind z.B. einfache Diole, Triole, Polyalkylenoxide oder Polyesterpolyole. Beispiele für einfache Diole und Triole sind Ethylenglykol, Propylenglykol, 1,2-Butandiol, 1,4-Butandiol, 1,3-Butandiol, 1,5-Pentandiol, Dipropylenglykol oder Trimethylolpropan. Geeignete Polyalkylenoxide sind z.B. Polyethylenglykole, Polypropylenglykole, Polybutylenglykole, Polytetrahydrofurandiole, sowie Polymere aus gemischten Alkylenoxiden, wie z.B. Polyoxyethylen-Polyoxypropylenglykole, wobei die Alkylenoxide statistisch oder in Blockform vorliegen können. Neben den Polyetherdiolen können auch Polyesterdiole eingesetzt werden, welche durch ringöffnende Polymerisation von Lactonen, wie z.B. e-Caprolacton und/oder d-Valerolacton hergestellt werden.

Die Monoisocyanate werden vorzugsweise ausgewählt aus aliphatischen, cycloaliphatischen, aromatischen oder arylaliphatischen Monoisocyanaten, die gesättigt oder ungesättigt sein können. Vorzugsweise enthält das Monoisocyanat keine ethylenisch ungesättigten Doppelbindungen. Beispiele sind Cyclohexylisocyanat, Phenylisocyanat, n-Propylisocyanat, n-Hexylisocyanat, Stearylisocyanat, 2-Isocyanatopropan, m-Tolylisocyanat, p-Tolylisocyanat, Benzylisocyanat, 2-Ethylphenylisocyanat, 1-Naphthylisocyanat oder 2-Naphthylisocyanat eingesetzt werden. Ganz besonders bevorzugt sind C₅-C₁₂-Arylenurethanmonoisocyanate, insbesondere Totuylenurethanmonoisocyanate, wie diese in der EP-A 1 188 779 beschrieben werden. Alle diese isocyanathaltigen Verbindungen können einzeln oder in Mischungen eingesetzt werden.

Nicht selten weisen die Verbindungen (A') jeweils mindestens eine Ester- und/oder Ethergruppe auf.

Als sich für Lacke eignende Bindemittel sollen die nichtflüchtigen Anteile der Lackzubereitung - ohne eventuell vorhandene Pigmente/ Füllstoffe - verstanden werden. Als Bindemittelkomponenten (C') eigenen sich z.B. Acrylat-, Methacrylatharze, (gesättigte und ungesättigte) Polyesterharze, Melaminharze, Epoxidharze, Alkydharze sowie Polyisocyanate. Hydraulische anorganische Bindemittel, wie Beton, eignen sich allerdings nicht für den Lackbereich und sind daher nicht als als Bindemittelkomponenten (C') anzusehen.

Häufig liegt die Bindemittelkomponente (C) in Form von jeweils nichtflüchtigen organischen Oligomeren (C') und/oder organischen Polymeren (C") vor.

In der Regel sind die organischen Oliogomere (C') und die organischen Polymere (C") als Bindemittel für Einbrennlacke geeignet. Einbrennlacke enthalten Bindemittel, die unter dem Einfluss von Wärme getrocknet bzw. eingebrannt werden, d.h. thermisch vernetzend sind. Damit thermische Vernetzungsreaktionen stattfinden können sind meist Temperaturen von 80 bis 200°C erforderlich. Unter "Einbrennen" wird ein Härtungsvorgang verstanden, bei dem die Vernetzung des Bindemittels (und somit die Aushärtung) eine systembedingte Mindesttemperatur und Mindestzeitspanne erfordert.

In einer bevorzugten Ausführungsform der Erfindung enthält die Lackzubereitung 0,1 bis 80,0 Gew.% der Lösungsmittelkomponente (D).

Die für die Lösungsmittelkomponente (D) gewählten Lösungsmittel für Lacke lösen einerseits das Bindemittel bzw. Komponenten des Bindemittels und verflüchtigen sich unter Trocknungs-/Härtungsbedingungen. Zweckmäßigerweise werden besonders bevorzugt solche Lösungsmittelspezies ausgewählt, welche in der Lackzubereitung gegenüber den Komponenten (A), (B) und (C) zumindest weitgehend (oder besser vollständig) chemisch inert sind und vorzugsweise auch bei der Härtung der Lackzubereitung zumindest weitgehend nicht (oder besser vollständig nicht) mit den besagten Komponenten reagieren. Dem Fachmann sind entsprechend in Frage kommende Lösungsmittelspezies ohne weiteres bekannt. Als Lösungsmittelkomponente (D) kommen typischerweise die dem Fachmann bekannten Stoffgruppen bzw. Lösungsmittelspezies / Lösungsmittelgemische, wie Ester (z.B. Ethylacetat), Ketone (z.B. Aceton), Aromaten (z.B. Toluol), Aliphaten (z.B. Hexan), Alkohole (z.B. Isopropanol) und/oder Glykolether alleine oder als Mischung zur Anwendung.

Somit liegt die Lösungsmittelkomponente (D) normalerweise in Form von flüchtigen anorganischen und/oder organischen Molekülen (D') vor.

Die Lackzubereitung kann hydriertes Rizinusöl und/oder Lithiumsalze, insbesondere LiCl und/oder ionische Flüssigkeiten enthalten. Die Lackzubereitung kann noch weitere (typische) Lackadditive, wie UV-Adsorber und/ oder Entschäumer, enthalten.

Die Lackzubereitung kann 0,1 bis 75 Gew. % einer Pigment- /Füllstoffkomponente (E) enthalten. Die Pigment-/ Füllstoffkomponente (E) setzt sich zusammen aus nichtflüchtigen anorganischen und/oder organischen Verbindungen, die sich als Pigmente und/ oder Füllstoffe für Lacke eignen.

Pigmente sind Farbmittel, die aus feinen Teilchen bestehen, die in der flüssigen Phase der Lackzubereitung unlöslich sind und aufgrund ihrer optischen, schützenden und/oder dekorativen Eigenschaften verwendet werden. Ein Füllstoff ist dagegen ein körniges oder pulverförmiges Material das ebenfalls in der flüssigen Phase der Lackzubereitung unlöslich ist und verwendet wird, um bestimmte physikalische Eigenschaften zu erreichen oder zu verbessern. Häufig eingesetzte Pigmente sind z.B. Titandioxid, Ruß, Eisenoxide, Ultramarinpigmente, Phthalocyaninpigmente, Metalleffekt- und Perlglanzpigmente. Füllstoffe sind meist relativ kostengünstige Stoffe, die z.B. Lackzubereitungen beigemischt werden, um die technische Einsatzmöglichkeiten bzw. die Qualität zu verbessern. Typische Füllstoffe für Lackzubereitungen sind z.B. Bariumsulfat, Calciumcarbonat, Talkum, Glimmer, Aluminiumhydroxid, Siliciumdioxid sowie Nanopartikel, z.B. solche auf der Basis von Siliciumdioxid, Aluminiumoxid oder Zirkoniumoxid.

Häufig ist die Lackzubereitung allerdings frei von Pigmenten und Füllstoffen und wird zur Herstellung von Klarlacken eingesetzt. Klarlacke sind Beschichtungsmittel, die auf ein Substrat aufgetragen, eine transparente Beschichtung mit schützenden, dekorativen oder spezifischen technischen Eigenschaften bilden.

Die Applikation der erfindungsgemäßen Lackzubereitung kann durch übliche Applikationsmethoden wie Spritzen, Rakeln, Streichen, Gießen, Tauchen, Tränken, Träufeln oder Walzen erfolgen. Vorzugsweise werden Spritzapplikationsmethoden angewendet, wie pneumatische Spritzapplikation, elektrostatische Spritzapplikation (ESTA), gegebenenfalls verbunden mit Heißspritzapplikation (z.B. Hot-Air-Heißspritzen).

Die Aushärtung der applizierten Lackzubereitung kann nach einer gewissen Ruhezeit (Ablüften) erfolgen. Die Ruhezeit dient beispielsweise zum Verlauf und zur Entgasung der Lackschicht oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschicht eintreten (wie eine vollständige vorzeitige Vernetzung).

In einer bevorzugten Ausführungsform der Erfindung ist die Lackzubereitung thermisch härtbar. Die thermische Härtung der Beschichtungsmittel weist keine methodischen Besonderheiten auf, sondern erfolgt nach den üblichen und bekannten Methoden wie Erhitzen in einem Umluftofen, oder Bestrahlen mit IR-Lampen. Dabei kann die thermische Härtung auch stufenweise erfolgen. Vorteilhafterweise erfolgt die thermische Härtung bei einer Temperatur von 30 bis 200°C, besonders bevorzugt bei 40 bis 190°C und insbesondere 50 bis 180°C während einer Zeit von 1 Minute bis zu 10 Stunden, wobei bei den für die Automobilreparaturlackierung angewandten Temperaturen, die bevorzugt zwischen 30 und 90°C liegen, auch längere Härtungszeiten zur Anwendung kommen können.

Somit betrifft die vorliegende Erfindung auch ein lackiertes Substrat, erhältlich durch thermische Behandlung einer auf das Subtrat aufgetragenen Lackzubereitung, welche vorstehend beschrieben ist. Oft erfolgt die thermische Behandlung in der Praxis dadurch, daß bei einer Temperatur unterhalb von 80 °C forciert getrocknet und/ oder innerhalb eines Temperaturbereiches von 80 bis 200 °C eingebrannt wird.

Häufig liegt das Substrat in Form eines (bevorzugt metallischen) Maschinenelements vor. Das Maschinenelement kann die Karosserie von Fortbewegungsmitteln (insbesondere Kraftfahrzeuge, wie Motorräder, PKW, LKW, Busse) oder von Teilen davon betreffen. Die erfindungsgemäße Lackzubereitung findet typischerweise Anwendung im Bereich allgemeine industrielle Beschichtungen bzw. Korrosionsschutzbeschichtungen (Maschinenlacke, Schienenfahrzeuge, Baumaschinen, Landmaschinen, Schiffe, Container etc.), sowie für Emballagen, Coils, weißer Ware, Folien, von optischen, elektrotechnischen und mechanischen Bauteilen, sowie von Gegenständen des täglichen Bedarfs.

Nachstehend soll die Erfindung zuätzlich anhand von Beispielen erläutert werden.

Konkret werden die anwendungstechnischen Vorteile verschiedener erfindungsgemäßer Lackzubereitungen gegenüber bereits bekannten (nicht erfindungsgemäßen) Lackzubereitungen gezeigt. Wesentliche Aspekte sind in diesem Zusammenhang: Ablaufverhalten bei der Applikation, Einfluss auf Trübung im Klarlack, Einfluß auf den Glanz und Glanzschleier des Lacks sowie Einfluß auf die Lagerstabilität einer pigmentierten Beschichtung.

### Prüfsysteme:

Als Prüfsysteme wurden 4 verschiedene Lacksysteme auf Basis von Acrylat-Melamin, Polyester-Melamin sowie 2 Komponenten-Polyurethan Basis verwendet, die als Lacke Anwendung finden und im weiteren als Lack bezeichnet werden.

### Formulierung 1:

### Basis : Acrylat / Melamin Einbrennlack

| | |
|---|---|
| Setal® 1756 VV 65 | 60,0 g |
| Setamine® US 138 BB 70 | 24,0 g |
| Shellsol A | 8,0 g |
| Xylol | 7,8 g |
| BYK®-310 | 0,2 g |
| Gesamt | 100,0 g |

### Lackherstellung:

Die einzelnen Bestandteile werden unter Rühren bei Raumtemperatur, bei 2 m/s mit dem Dispermaten CV mit einer Zahnscheibe nacheinander zugegeben und anschließend zur Homogenisierung noch weitere 10 Minuten gerührt.

### Rohstoffe:

| | |
|---|---|
| Setal®1756 VV-65: | Acrylat Bindemittel, 65%ig in Solvesso 100, Nuplex Resins B.V. |
| Setamine® US 138 BB 70: | Melamin Bindemittel, 70%ig in 1-Butanol, Nuplex Resins B.V. |
| Shellsol A: | aromatischer Kohlenwasserstoff C9-C10, Overlack AG |
| BYK®-310: | 25%ige Lösung eines polyestermodifizierten Polydimethylsiloxans, BYK Chemie GmbH |

### Verarbeitung:

| | |
|---|---|
| Viskositätseinstellung : | 30s DIN4 Auslaufbecher bei 23°C |
| Verdünnung : | Shellsol A / Xylol 1 : 1 |
| Applikation : | Pneumatische Spritzlackierung |
| Trocknung : | 15 min. bei 23°C, 25 min. bei 140°C |

### Formulierung 2:

### Basis : Polyester / Melamin Einbrennlack

| | |
|---|---|
| Setal® 1715 VX 74 | 52,0 g |
| Setamine® US 138 BB 70 | 24,0 g |
| Shellsol A | 6,0 g |
| Solvesso 150 | 6,0 g |
| Xylol | 6,0 g |
| Isobutanol | 6,0 g |
| Gesamt | 100,0 g |

### Lackherstellung:

Die einzelnen Bestandteile werden unter Rühren bei Raumtemperatur, bei 2 m/s mit dem Dispermaten CV mit einer Zahnscheibe nacheinander zugegeben und anschließend zur Homogenisierung noch weitere 10 Minuten gerührt.

### Rohstoffe:

| | |
|---|---|
| Setal® 1715 VX-74: | Acrylat Bindemittel, 72%ig in Solvesso 100/Xylol 75:25, Nuplex Resins B.V. |
| Setamine® US 138 BB 70: | Melamin Bindemittel, 70%ig in 1-Butanol, Nuplex Resins B.V. |
| Shellsol A: | aromatischer Kohlenwasserstoff C9-C10, Overlack AG |
| Solvesso 150: | aromatischer Kohlenwasserstoff C10-C11, Overlack AG |

### Verarbeitung:

| | |
|---|---|
| Viskositätseinstellung : | 30 s DIN4 Auslaufbecher bei 23°C |
| Verdünnung : | Shellsol A |
| Applikation : | Elektrostatische Spritzackierung |
| Trocknung : | 15 min. bei 23°C, 20 min. bei 140°C |

### Formulierung 3:

### Basis: 2 Komponenten-Polyurethan-Lack

| | |
|---|---|
| Setalux® 1756 VV 65 | 67,2 g |
| Tin Stab BL 277 | 0,7 g |
| BYK®-331 | 0,1 g |
| BYK®-306 | 0,3 g |
| Shellsol A | 4,9 g |
| Desmodur® N3390 BA/SN | 12,9 g |
| Vestanat® T1890-E | 7,0 g |
| Dowanol MPA | 6,6 g |
| Gesamt | 100,0 g |

### Lackherstellung:

Die einzelnen Bestandteile werden unter Rühren bei Raumtemperatur, bei 2 m/s mit dem Dispermaten CV mit einer Zahnscheibe nacheinander zugegeben und anschließend zur Homogenisierung noch weitere 10 Minuten gerührt.

### Rohstoffe:

| | |
|---|---|
| Setalux® 1756 VV-65: | Acrylat Bindemittel, 65%ig in Solvesso 100, Nuplex Resins B.V. |
| Tin Stab BL 277: | Dibutylzinndilaurat, Overlack AG |
| BYK®-331: | 100%iges Polyethermodifiziertes Polydimethyl-siloxan, BYK Chemie GmbH |
| BYK®-306: | 12,5%ige Lösung eines polyethermodifizierten Polydimethylsiloxans in Xylol / Monophenylglykol 7/2, BYK-Chemie GmbH |
| Shellsol A: | aromatischer Kohlenwasserstoff C9-C10, Overlack AG |
| Desmodur® N3390 BA/SN: | Aliphatisches Polyisocyanat, 90%ig in Butylacetat/ Solvesso 100 1:1, Bayer Material Science AG |
| Vestanat® T1890-E: | Cylcoaliphatisches Polyisocyanat, 70%ig in Butylacetat/Solvesso 100 1:2, Evonik Industries AG |
| Dowanol MPA: | 1-Methoxypropylacetat, Overlack AG |

### Verarbeitung:

| | |
|---|---|
| Viskositätseinstellung : | 30 s DIN4 Auslaufbecher bei 23°C |
| Verdünnung : | Shellsol A |
| Applikation : | Elektrostatische Spritzlackierung |
| Trocknung : | 10 min. bei 23°C, 60 min. 80°C |

### Formulierung 4:

### Aluminiumpigmentierter Polyester-Melamin Basislack

| | |
|---|---|
| Setal® 189 XX-65 | 50,0 g |
| Setamine® US 138 BB 70 | 12,3 g |
| CAB 381.05 Lösung (25% in Butylacetat) * | 15,0 g |
| Aluminium-Slurry ** | 10,0 g |
| Butylacetat | 12,4 g |
| BYK®-315 | 0,3 g |
| Gesamt | 100,0 g |

### CAB-Lösung *

| | |
|---|---|
| Butylacetat | 75,0 g |
| CAB 381.05 | 25,0 g |
| Gesamt | 100,0 g |

Die Anlösung des CAB Pulvers 25%ig in Butylacetat erfolgt durch Zugabe der CAB unter Rühren mit dem Dispermaten CV, bei Raumtemperatur 30 Minuten mit einer Zahnscheibe bei 5 m/s in das vorgelegte Butylacetat.

### Aluminium-Slurry **

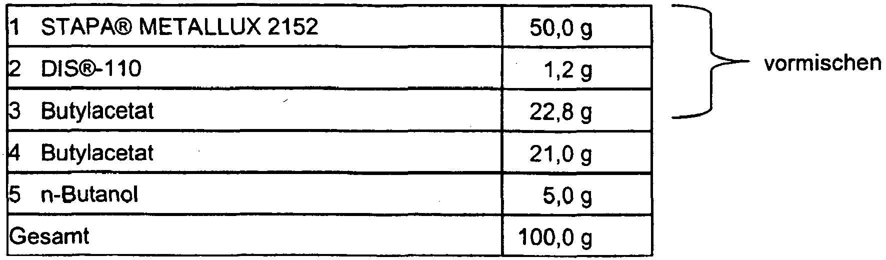

Der Aluminiumslurry wird hergestellt, indem die Rohstoffe 1 bis 3 mit dem Dispermaten CV bei Raumtemperatur mit einer Zahnscheibe bei 2 m/s vorgemischt werden und anschließend die Rohstoffe 4 und 5 zudosiert werden. Zur vollständigen Benetzung des Aluminiumpigmentes wird der Slurry weitere 10 Minuten gerührt.

### Lackherstellung:

Zur Herstellung des Lackes werden die einzelnen Bestandteile nacheinander unter Rühren mit dem Dispermaten CV bei Raumtemperatur, bei 2 m/s mit einer Zahnscheibe nacheinander zugegeben und anschließend zur Homogenisierung noch weitere 10 Minuten gerührt.

### Rohstoffe:

| | |
|---|---|
| Setal® 189 XX-65: | Polyester Bindemittel, 65%ig in Xylol, Nuplex Resins B.V. |
| Setamine® US 138 BB 70: | Melamin Bindemittel, 70%ig in 1-Butanol, Nuplex Resins B.V. |
| CAB 381.05: | Cellulose-Acetat-Butyrat, 100%ig, Eastman Chemical B.V. |
| BYK®-315: | 25%ige Lösung eines polyestermodifizierten Polymethylalkylsiloxans in Methoxypropylacetat / Phenoxyethanol 1/1, BYK Chemie GmbH |
| STAPA® METALLUX 2152: | 75%ige Aluminiumpaste in Testbenzin/ Solventnaphtha 1:1, Eckart GmbH |
| DIS®-110: | 52%ige Lösung eines Copolymeren mit sauren Gruppen in Methoxpropylacetat / Alkylbenzole 1 / 1, BYK Chemie GmbH |

Bereits bekanntes Rheologiesteuerungsmittel (nicht erfindungsgemäß):

| | |
|---|---|
| BYK-®405: | 52%ige Lösung von Polyhydroxycarbonsäureamiden in Xylol / Alkylbenzole / Isobutanol 5/4/1, BYK Chemie GmbH |
| BYK-®410: | 52%ige Lösung eines modifizierten Harnstoffes in N-Methyl-pyrrolidon, BYK Chemie GmbH |
| BYK®-430: | 30%ige Lösung eines hochmolekularen modifizierten Polyamids in Isobutanol/Solventnaphtha 9/1, BYK Chemie GmbH |
| Polymerer Harnstoff: | 30%ige Lösung eines modifizierten Polyharnstoffes in Dimethylsulfoxid, BYK Chemie GmbH |
| Aerosil® R972: | Hydrophobe pyrogene Kieselsäure, 100%ig, Evonik Industries AG |

### Polymerer Harnstoff (Herstellverfahren):

Zunächst wird ein Monoaddukt, wie in der EP-A 1 188 779 erläutert, aus einem Gemisch von 2,4-Toluylendiisocyanat und 2,6-Toluylendiisocyanat (Desmodur T80, Bayer AG) und Butoxypolyalkylenglycol (Polyglycol B11/50, Clariant) hergestellt.

In einem Reaktionsgefäß werden unter Rühren 3,8 g (0,09 mol) LiCl in 146,3 g Dimethylsulfoxid gelöst. Danach werden 10,3 g (0,075 mol) meta-Xylylendiamin zugegeben und die klare Mischung auf 60 °C erwärmt. Anschließend wird eine Mischung aus 10,4 g (0,06 mol) Desmodur T65 (Gemisch von 2,4-Toluylen-diisocyanat und 2,6-Toluylendiisocyanat, Bayer AG) und 38,2 g (0,03 mol) des Monoaddukts aus Desmodur T80 und Butoxypolyalkylenglycol unter Rühren innerhalb von 1 Stunde zugetropft, so dass die Temperatur nicht über 65 °C steigt. Zur Vervollständigung der Reaktion wird das Reaktionsgemisch für 3 Stunden bei 60 °C gerührt. Es wird ein klares, farbloses und flüssiges Produkt erhalten.

### Test auf Ablaufgrenze:

Zur Überprüfung des Einflusses auf das Ablaufverhalten von Lacken werden die Rheologiesteuerungsmittel mit Ausnahme von Aerosil® R972 in die Prüfsysteme unter Rühren bei Raumtemperatur mit einem Dispermat CV bei 2 m/s mit einer Zahnscheibe 2 min. eingearbeitet. Die Einarbeitung des pulverförmigen Aerosil® R972 erfolgt 30 min. bei 18 m/s mit einem Dispermaten CV mit einer Teflonscheibe und 1 mm Glasperlen (Lack:Perlen 1:1) in einem doppelwandigen Dispermatentopf bei 20°C. Einen Tag nach der Einarbeitung werden die Lacke mit dem DIN4 Becher auf eine Auslaufzeit von 30s verdünnt (DIN EN ISO 2431). Im Anschluss erfolgt die Applikation der Lacke, wie bei der Formulierung angegeben, mit elektrostatischer bzw. pneumatischer Spritzapplikation auf senkrecht hängende geprimerte Lochbleche (Stahl 30x50 cm) im Keil, mit einer Trockenschichtdicke von 10-50 µm. Die anschließende Ablüftung der Lackbleche, sowie die Trocknung durch Einbrennen bzw. bei forcierter Trocknung im Umluftofen erfolgt ebenfalls auf den senkrechten Blechen. Die Überprüfung des Ablaufverhaltens wird nach vollständiger Trocknung der Lacke durch visuelle Auswertung durchgeführt. Je höher die Ablaufgrenze ist, desto besser ist die rheologische Wirksamkeit des Rheologiesteuerungsmittels, d.h. desto höher ist die Schichtdicke des Lackes die an senkrechten Flächen appliziert werden kann. Die Bestimmung der Trockenschichtdicke erfolgt mit dem Byko Test 1500 der Fa. BYK-Gardner nach DIN EN ISO 2178. Die Ergebnisse sind in Tabelle 1 zusammengefasst.

**Tabelle 1:**

| Additiv (1 Gew.% Wirksubstanz bezogen auf gesamt) | Ablaufgrenze / µm trocken | | |
|---|---|---|---|
| | Formulierung | | |
| | 1 | 2 | 3 |
| Nullprobe | 16 | 17 | 19 |
| Polymerer Harnstoff/ BYK®-430 7:3 | 36 | 40 | 28 |
| Polymerer Harnstoff/ BYK®-430 5:5 | 33 | 37 | 26 |
| Polymerer Harnstoff | 23 | 21 | 23 |
| BYK®-430 | 20 | 20 | 23 |
| BYK®-410 | 28 | 26 | 17 |
| Aerosil® R972 | 24 | 20 | 22 |
| Aerosil® R972 + BYK®-405 * | 30 | 23 | 22 |

| | | | |
|---|---|---|---|
| * 40% Lieferform auf Aerosil bezogen | | | |

### Test auf Verträglichkeit:

Hierzu werden die Rheologiesteuerungsmittel mit Ausnahme von Aerosil® R972 in 3 verschiedene Klarlacke unter Rühren bei Raumtemperatur mit einem Dispermat CV mit einer Zahnscheibe bei 2 m/s 2 min. eingearbeitet. Die Einarbeitung des pulverförmigen Aerosil® R972 erfolgt 30 min. bei 18 m/s mit einem Dispermaten CV, mit einer Teflonscheibe und 1 mm Glasperlen (Lack:Perlen 1:1) in einem doppelwandigen Dispermatentopf bei 20°C. Die Beurteilung des Einflusses der Rheologiesteuerungsmittel auf die Trübung des Nasslackes erfolgt 1 Tag nach der Einarbeitung. Je geringer der Einfluss auf die Trübung ist, desto besser ist die Verträglichkeit des Rheologiesteuerungsmittels im Lacksystem. Die Beurteilung erfolgt visuell, wobei eine Skala von 1 - 5 verwendet wird (1 = klar bis 5 = stark trüb) und ist in Tabelle 2 dargestellt.

**Tabelle 2:**

| Additiv (1 Gew.% Wirksubstanz bezogen auf gesamt) | Trübung im Nasslack | | |
|---|---|---|---|
| | Formulierung | Formulierung | Formulierung |
| | 1 | 2 | 3 |
| Nullprobe | 1 | 1 | 1 |
| Polymerer Harnstoff/ BYK®-430 9:1 | 1 | 1 | 1 |
| Polymerer Harnstoff/ BYK®-430 8:2 | 2 | 1 | 2 |
| Polymerer Harnstoff/ BYK®-430 7:3 | 2 | 2 | 2 |
| Polymerer Harnstoff/ BYK®-430 5:5 | 3 | 3 | 3 |
| BYK®-430 | 4 * | 4 * | 4 |
| Aerosil® R972 | 4 | 4 | 4 |

| | | | |
|---|---|---|---|
| * Ausflockung | | | |

### Test auf Beeinflussung von Glanz bzw. Glanzschleier:

Zur Überprüfung des Einflusses der Rheologiesteuerungsmittel auf den Glanz und Glanzschleier von Lackbeschichtungen werden die Rheologiesteuerungsmittel mit Ausnahme von Aerosil® R972 in die Prüfsysteme unter Rühren bei Raumtemperatur mit einem Dispermat CV bei 2 m/s mit einer Zahnscheibe 2 min. eingearbeitet. Die Einarbeitung des pulverförmigen Aerosil® R972 erfolgt 30 min. bei 18 m/s mit einem Dispermaten CV mit einer Teflonscheibe und 1 mm Glasperlen (Lack:Perlen 1:1) in einem doppelwandigen Dispermatentopf bei 20°C. Einen Tag nach der Einarbeitung werden die Lacke mit dem DIN4 Becher auf eine Auslaufzeit von 30s verdünnt (DIN EN ISO 2431). Die Applikation erfolgt, wie bei der Formulierung angegeben, bei elektrostatischer bzw. pneumatischer Spritzapplikation. Appliziert wird auf geprimerte Stahlbleche (30x50cm) mit einer Trockenschichtdicke von 35 µm. Die Applikation erfolgt auf dem senkrechten Blech, die Ablüftung und das anschließende Einbrennen, bzw. die forcierte Trocknung bei liegendem Substrat. Die Bestimmung des Glanzes bzw. Glanzschleiers erfolgt 1 Tag nach der Applikation mit dem Haze-Gloss der BYK-Gardner nach DIN 67530. Je höher die Werte für den Glanz und Glanzschleier sind, desto besser ist die Verträglichkeit des Rheologiesteuerungsmittels. Die Ergebnisse sind in Tabelle 3 und 4 zusammengefasst.

**Tabelle 3:**

| Formulierung 2 Polyester/Melamin Einbrennlack | | |
|---|---|---|
| Additiv (1 Gew.% Wirksubstanz bez. auf gesamt) | Glanz 20° | Glanzschleier |
| Nullprobe | 87 | 20 |
| Polymerer Harnstoff/BYK®-430 7:3 | 88 | 15 |
| Polymerer Harnstoff/BYK®-430 5:5 | 88 | 18 |
| Polymerer Harnstoff/BYK®-430 3:7 | 86 | 25 |
| Polymerer Harnstoff | 84 | 54 |
| BYK®-430 | 74 | 155 |
| Aerosil® R972 | 85 | 30 |
| Aerosil® R972 + BYK®-405 * | 84 | 40 |

| | | |
|---|---|---|
| * 40% Lieferform auf Aerosil bezogen | | |

**Tabelle 4:**

| Formulierung 1 Acrylat/Melamin Einbrennlack | | |
|---|---|---|
| Additiv (1 Gew.% WS bez. auf gesamt) | Glanz 20° | Glanzschleier |
| Nullprobe | 95 | 17 |
| Polymerer Harnstoff/BYK®-430 8:2 | 95 | 17 |
| Polymerer Harnstoff/BYK®-430 7:3 | 95 | 18 |
| Polymerer Harnstoff/BYK®-430 6:4 | 93 | 25 |
| Polymerer Harnstoff/BYK®-430 5:5 | 90 | 35 |
| Polymerer Harnstoff/BYK®-430 3:7 | 85 | 70 |
| BYK®-430 | 77 | 182 |
| Aerosil® R972 + BYK®-405 * | 81 | 144 |

| | | |
|---|---|---|
| * 40% Lieferform auf Aerosil bezogen | | |

### Test auf Beeinflussung der Lagerstabilität:

Die Überprüfung des Einflusses der Rheologiesteuerungsmittel auf die Lagerstabilität erfolgt in einem aluminiumpigmentierten Automobil-Basislack. In den fertig formulierten Lack werden direkt nach der Herstellung die verschiedenen Rheologiesteuerungsmittel unter Rühren mit dem Dispermat CV bei Raumtemperatur mit einer Zahnscheibe 2 Minuten bei 2m/s eingearbeitet. Die Überprüfung der Lagerstabilität erfolgt durch Lagerung bei Raumtemperatur (23°C) und bei 50°C im Umluftofen über einen Zeitraum von 4 Tagen in 50 ml Glasflaschen. Nach erfolgter Lagerung werden die Proben visuell auf Bodensatz und Synereseneigung geprüft. Der Bodensatz wird sensorisch mit einem Spatel beurteilt. Die Synereseneigung wird mit einem Lineal ausgemessen und in % bezogen auf die Gesamtprobenhöhe angegeben. Eine gute Lagerstabilität durch das Rheologiesteuerungsmittel wird dann erreicht, wenn das Pigment unabhängig von der Lagertemperatur möglichst homogen verteilt bleibt, das heißt die Synereseneigung minimiert wird. Die Ergebnisse sind in Tabelle 5 zusammengefasst.

**Tabelle 5:**

| Formulierung 4: Aluminiumpigmentierter Automobil Basislack | | |
|---|---|---|
| Additiv (0,8 Gew.% Wirksubstanz bezogen auf gesamt) | Synerese/ % nach 4 Tagen 23°C | Synerese/ % nach 4 Tagen 50°C |
| Nullprobe | 88 | 93 |
| BYK-®430 | 28 | 88 |
| Polymerer Harnstoff | 73 | 56 |
| Polymerer Harnstoff/BYK®-430 7:3 | 35 | 33 |

Alle Proben zeigen keinen festen Bodensatz, auch die Nullprobe ist weich aufrührbar.

Die Ergebnisse der vorstehenden Beispielversuche belegen die anwendungstechnischen Vorteile der erfindungsgemäßen Lackzubereitung gegenüber bereits bekannten (nicht erfindungsgemäßen) Lackzubereitungen, da die entsprechende (die gemäß der Erfindung vorgesehene) Kombination Harnstoff/ Polyamid einerseits sich positiv auf das Standvermögen auswirkt und andererseits die geringste Trübungsneigung im Klarlack verursacht. Die optischen Eigenschaften der Beschichtung, wie Glanz und Glanzschleier, werden durch die entsprechende Kombination Harnstoff/ Polyamid ebenfalls am geringsten beeinflusst, was neben dem Einfluss auf die Trübung im Klarlack ein weiterer Hinweis für die ausgesprochen gute Verträglichkeit ist. Die Lagerstabilität des pigmentierten Lacks wurde ebenfalls durch die entsprechende Kombination Harnstoff/ Polyamid (bei 50°C Lagerung) am stärksten verbessert. Dies ist neben dem guten Ergebnis bezüglich Standvermögen des Einbrennlacks ein weiterer Hinweis auf die temperaturunempfindliche Wirkungsweise der entsprechenden Kombination Harnstoff/ Polyamid.

## Patentansprüche

1. Lackzubereitung enthaltend
i) 0,1 bis 9,0 Gew.% einer Harnstoffkomponente (A),
ii) 0,1 bis 5,0 Gew.% einer Amidkomponente (B),
iii) 10,0 bis 90,0 Gew.% einer sich jeweils von der Harnstoffkomponente (A) und von der Amidkomponente (B) unterscheidenden Bindemittelkomponente (C) sowie
iv) 0 bis 85,0 Gew.% einer Lösungsmittelkomponente (D),
wobei die Summe der Anteile der Harnstoffkomponente (A) und der Amidkomponente (B) 0,3 bis 10,0 Gew.% sowie die Summe der Anteile der Bindemittelkomponente (C) und der Lösungsmittelkomponente (D) 80,0 bis 99,7 Gew.% beträgt, sowie die Amidkomponente (B) sich zusammensetzt aus Verbindungen, die jeweils mindestens zwei Amidbindungen aufweisen, an deren Stickstoffatom jeweils mindestens ein Wasserstoffatom gebunden ist.

2. Lackzubereitung nach Anspruch 1, **dadurch gekennzeichnet, daß** die Summe der Anteile der Harnstoffkomponente (A) und Amidkomponente (B) 0,4 bis 6 Gew.%, bevorzugt 0,5 bis 2,0 Gew.% sowie die Summe der Anteile der Bindemittelkomponente (C) und der Lösungsmittelkomponente (D) 85,0 bis 99,5 Gew.%, bevorzugt 90,0 bis 99,5 Gew.%, beträgt.

3. Lackzubereitung nach Anspruch 1 oder Anspruch 2, **dadurch gekennzeichnet, daß** die Amidkomponente (B) in Form von Verbindungen (B') vorliegt, welche jeweils ein Molekulargewicht von 300 bis 50.000 und jeweils 2 bis 300 Amidgruppen aufweisen, mit der Maßgabe, daß jeweils der Gewichtsanteil der in den Amidgruppen enthaltenen Heteroatome bezogen auf das Molekulargewicht der jeweiligen Verbindung (B') 0,2 bis 25,0 % beträgt und an den Stickstoffatomen der Amidgruppen jeweils mindestens ein Wasserstoffatom gebunden ist.

4. Lackzubereitung nach Anspruch 3, **dadurch gekennzeichnet, daß** die Verbindungen (B') jeweils ein Molekulargewicht von 300 bis 30.000 und jeweils 2 bis 150 Amidgruppen aufweisen, mit der Maßgabe, daß jeweils der Gewichtsanteil der in den Amidgruppen enthaltenen Heteroatome bezogen auf das Molekulargewicht der jeweiligen Verbindung (B') 2 bis 20,0 % beträgt und an den Stickstoffatomen der Amidgruppen jeweils mindestens ein Wasserstoffatom gebunden ist.

5. Lackzubereitung nach Anspruch 3 oder 4, **dadurch gekennzeichnet, daß** die Verbindungen (B') jeweils mindestens eine lineare oder verzweigte C₁₁-C₃₆ Alkylengruppe enthalten.

6. Lackzubereitung nach einem der Ansprüche 1 bis 5, **dadurch gekennzeichnet, daß** die Harnstoffkomponente (A) in Form von Verbindungen (A') vorliegt, welche jeweils aufweisen ein Molekulargewicht von 500 bis 300.000 und jeweils 1 bis 400 Harnstoffgruppen, mit der Maßgabe, daß jeweils der Gewichtsanteil der in den Harnstoffgruppen enthaltenen Heteroatome bezogen auf das Molekulargewicht der jeweiligen Verbindung (A') 0,2 bis 25,0 % beträgt.

7. Lackzubereitung nach Anspruch 6, **dadurch gekennzeichnet, daß** die Verbindungen (A') jeweils ein Molekulargewicht von 500 bis 60.000 und jeweils 2 bis 150 der Harnstoffgruppen aufweist, mit der Maßgabe, daß jeweils der Gewichtsanteil der in den Harnstoffgruppen enthaltenen Heteroatome bezogen auf das Molekulargewicht der jeweiligen Verbindung (A') 2 bis 25 % beträgt.

8. Lackzubereitung nach einem der Ansprüche 6 oder 7, **dadurch gekennzeichnet, daß** die Verbindungen (A') jeweils mindestens eine Ester- und/oder Ethergruppe aufweisen.

9. Lackzubereitung nach einem der Ansprüche 1 bis 8, **dadurch gekennzeichnet, daß** die Bindemittelkomponente (C) in Form von jeweils nichtflüchtigen organischen Oligomeren (C') und/oder organischen Polymeren (C") vorliegt.

10. Lackzubereitung nach Anspruch 9, **dadurch gekennzeichnet, daß** die organischen Oliogomere (C') und die organischen Polmere (C") als Bindemittel für Einbrennlacke geeignet sind.

11. Lackzubereitung nach einem der Ansprüche 1 bis 10, **dadurch gekennzeichnet, daß** die Lösungsmittelkomponente (D) in Form von flüchtigen anorganischen und/oder organischen Molekülen (D') vorliegt.

12. Lackzubereitung nach einem der Ansprüche 1 bis 11, enthaltend hydriertes Rizinusöl und/oder Lithiumsalze, insbesondere LiCl und/oder ionische Flüssigkeiten.

13. Lackzubereitung nach einem der Ansprüche 1 bis 12, enthaltend iv) 0,1 bis 80,0 Gew.% der Lösungsmittelkomponente (D).

14. Lackzubereitung nach einem der Ansprüche 1 bis 13, enthaltend v) 0,1 bis 75 Gew. % einer Pigment- /Füllstoffkomponente (E).

15. Lackzubereitung nach einem der Ansprüche 1 bis 14, welche thermisch härtbar ist.

16. Lackiertes Substrat erhältlich durch thermische Behandlung einer auf das Subtrat aufgetragenen Lackzubereitung gemäß einem der Ansprüche 1 bis 15.

17. Lackiertes Substrat nach Anspruch 16, **dadurch gekennzeichnet, daß** die thermische Behandlung dadurch erfolgt, daß bei einer Temperatur unterhalb von 80 °C forciert getrocknet und/ oder innerhalb eines Temperaturbereiches von 80 bis 200 °C eingebrannt wird.

18. Lackiertes Substrat nach Anspruch 16 oder 17, wobei das Substrat in Form eines Maschinenelements vorliegt.

## Claims

1. Lacquer preparation comprising
i) 0.1 to 9.0 wt.% of a urea component (A),
ii) 0.1 to 5.0 wt.% of an amide component (B),
iii) 10.0 to 90.0 wt.% of a binder component (C) which differs in each case from the urea component (A) and from the amide component (B) and
iv) 0 to 85.0 wt.% of a solvent component (D)
wherein the sum of the contents of the urea component (A) and the amide component (B) is 0.3 to 10.0 wt.% and the sum of the contents of the binder component (C) and the solvent component (D) is 80.0 to 99.7 wt.%, and the amide component (B) is composed of compounds which in each case contain at least two amide bonds, to the nitrogen atom of which in each case at least one hydrogen atom is bonded.

2. Lacquer preparation according to claim 1, **characterized in that** the sum of the contents of the urea component (A) and amide component (B) is 0.4 to 6 wt.%, preferably 0.5 to 2.0 wt.%, and the sum of the contents of the binder component (C) and the solvent component (D) is 85.0 to 99.5 wt.%, preferably 90.0 to 99.5 wt.%.

3. Lacquer preparation according to claim 1 or claim 2, **characterized in that** the amide component (B) is present in the form of compounds (B') which in each case have a molecular weight of from 300 to 50,000 and in each case contain 2 to 300 amide group, with the proviso that in each case the weight content of the hetero atoms contained in the amide groups, based on the molecular weight of the particular compound (B'), is 0.2 to 25.0 % and in each case at least one hydrogen atom is bonded to the nitrogen atoms of the amide groups.

4. Lacquer preparation according to claim 3, **characterized in that** the compounds (B') in each case have a molecular weight of from 300 to 30,000 and in each case contain 2 to 150 amide groups, with the proviso that in each case the weight content of the hetero atoms contained in the amide groups, based on the molecular weight of the particular compound (B'), is 2 to 20.0 % and in each case at least one hydrogen atom is bonded to the nitrogen atoms of the amide groups.

5. Lacquer preparation according to claim 3 or 4, **characterized in that** the compounds (B') in each case contain at least one linear or branched C₁₁-C₃₆-alkylene group.

6. Lacquer preparation according to one of claims 1 to 5, **characterized in that** the urea component (A) is present in the form of compounds (A') which in each case have a molecular weight of from 500 to 300,000 and in each case contain 1 to 400 urea groups, with the proviso that in each case the weight content of the hetero atoms contained in the urea groups, based on the molecular weight of the particular compound (A'), is 0.2 to 25.0 %.

7. Lacquer preparation according to claim 6, **characterized in that** the compounds (A') in each case have a molecular weight of from 500 to 60,000 and in each case contain 2 to 150 urea groups, with the proviso that in each case the weight content of the hetero atoms contained in the urea groups, based on the molecular weight of the particular compound (A'), is 2 to 25 %.

8. Lacquer preparation according to one of claims 6 or 7, **characterized in that** the compounds (A') in each case contain at least one ester and/or ether group.

9. Lacquer preparation according to one of claims 1 to 8, **characterized in that** the binder component (C) is present in the form of in each case non-volatile organic oligomers (C') and/or organic polymers (C").

10. Lacquer preparation according to claim 9, **characterized in that** the organic oligomers (C') and the organic polymers (C") are suitable as binders for stoving lacquers.

11. Lacquer preparation according to one of claims 1 to 10, **characterized in that** the solvent component (D) is present in the form of volatile inorganic and/or organic molecules (D').

12. Lacquer preparation according to one of claims 1 to 11, comprising hydrogenated castor oil and/or lithium salts, in particular LiCl, and/or ionic liquids.

13. Lacquer preparation according to one of claims 1 to 12, comprising
iv) 0.1 to 80.0 wt.% of the solvent component (D).

14. Lacquer preparation according to one of claims 1 to 13, comprising
v) 0.1 to 75 wt.% of a pigment/filler component (E).

15. Lacquer preparation according to one of claims 1 to 14, which can be cured by means of heat.

16. Lacquered substrate obtainable by heat treatment of a lacquer preparation according to one of claims 1 to 15 applied to the substrate.

17. Lacquered substrate according to claim 16, **characterized in that** the heat treatment is carried out by forced drying at a temperature below 80 °C and/or stoving within a temperature range of from 80 to 200 °C.

18. Lacquered substrate according to claim 16 or 17, wherein the substrate is present in the form of a machine element.

## Revendications

1. Préparation de vernis, contenant
i) 0,1 à 9,0 % en poids d'un composant urée (A),
ii) 0,1 à 5,0 % en poids d'un composant amide (B),
iii) 10,0 à 90,0 % en poids d'un composant liant (C), différent tant du composant urée (A) que du composant amide (B), ainsi que
iv) 0 à 85,0 % en poids d'un composant solvant (D),
dans laquelle la somme des proportions du composant urée (A) et du composant amide (B) est de 0,3 à 10,0 % en poids, et la somme des proportions du composant liant (C) et du composant solvant (D) est de 80,0 à 99,7 % en poids, et le composant amide (B) est constitué de composés dont chacun comprend au moins deux liaisons amide, à chacun des atomes d'azote desquels est lié au moins un atome d'hydrogène.

2. Préparation de vernis selon la revendication 1, **caractérisée en ce que** la somme des proportions du composant urée (A) et du composant amide (B) est de 0,4 à 6 % en poids, de préférence de 0,5 à 2,0 % en poids, et la somme des proportions du composant liant (C) et du composant solvant (D) est de 85,0 à 99,5 % en poids, en particulier de 90,0 à 99,5 % en poids.

3. Préparation de vernis selon la revendication 1 ou la revendication 2, **caractérisée en ce que** le composant amide (B) se présente sous forme de composés (B'), qui ont chacun une masse moléculaire de 300 à 50 000 et qui comportent chacun 2 à 300 groupes amide, à la condition que la proportion pondérale de chacun des hétéroatomes contenus dans les groupes amide soit, par rapport à la masse moléculaire du composé (B') correspondant, de 0,2 à 25,0 % en poids, et qu'au moins un atome d'hydrogène soit lié à chacun des atomes d'azote des groupes amide.

4. Préparation de vernis selon la revendication 3, **caractérisée en ce que** les composés (B') ont chacun une masse moléculaire de 300 à 30 000 et comportent chacun 2 à 150 groupes amide, à la condition que la proportion pondérale de chacun des hétéroatomes contenus dans les groupes amide soit, par rapport à la masse moléculaire du composé (B') correspondant, de 2 à 20,0 % en poids, et qu'au moins un atome d'hydrogène soit lié à chacun des atomes d'azote des groupes amide.

5. Préparation de vernis selon la revendication 3 ou 4, **caractérisée en ce que** chacun des composés (B') contient au moins un groupe alkylène en C₁₁-C₃₈ à chaîne droite ou ramifiée.

6. Préparation de vernis selon l'une des revendications 1 à 5, **caractérisée en ce que** le composant urée (A) se présente sous forme de composés (A') qui ont chacun une masse moléculaire de 500 à 300 000 et comportent chacun 1 à 400 groupes urée, à la condition que la proportion pondérale de chacun des hétéroatomes contenus dans les groupes urée soit, par rapport à la masse moléculaire du composé (A') correspondant, de 0,2 à 25,0 %.

7. Préparation de vernis selon la revendication 6, **caractérisée en ce que** chacun des composés (A') a une masse moléculaire de 500 à 60 000 et comporte 2 à 150 des groupes urée, à la condition que la proportion pondérale de chacun des hétéroatomes contenus dans les groupes urée soit, par rapport à la masse moléculaire du composé (A') correspondant, de 2 à 25 %.

8. Préparation de vernis selon l'une des revendications 6 ou 7, **caractérisée en ce que** chacun des composés (A') comprend au moins un groupe ester et/ou éther.

9. Préparation de vernis selon l'une des revendications 1 à 8, **caractérisée en ce que** le composant liant (C) se présente sous forme d'oligomères organiques (C') et/ou de polymères organiques (C"), respectivement non volatils.

10. Préparation de vernis selon la revendication 9, **caractérisée en ce que** les oligomères organiques (C') et les polymères organiques (C") conviennent en tant que liants pour vernis au four.

11. Préparation de vernis selon l'une des revendications 1 à 10, **caractérisée en ce que** le composant solvant (D) se présente sous forme de molécules inorganiques et/ou organiques volatiles (D').

12. Préparation de vernis selon l'une des revendications 1 à 11, contenant de l'huile de ricin hydrogénée et/ou des sels de lithium, en particulier LiCl et/ou des liquides ioniques.

13. Préparation de vernis selon l'une des revendications 1 à 12, contenant
iv) 0,1 à 80,0 % en poids du composant solvant (D).

14. Préparation de vernis selon l'une des revendications 1 à 13, contenant
v) 0,1 à 75 % en poids d'un composant pigment/matière de charge (E).

15. Préparation de vernis selon l'une des revendications 1 à 14, qui est durcissable à la chaleur.

16. Substrat verni pouvant être obtenu par traitement thermique d'une préparation de vernis, appliquée sur le substrat, selon l'une des revendications 1 à 15.

17. Substrat verni selon la revendication 16, **caractérisé en ce que** le traitement thermique consiste **en ce que** l'on procède à un séchage forcé à une température inférieure à 80°C et/ou l'on procède à une cuisson au four dans une plage de températures de 80 à 200°C.

18. Substrat verni selon la revendication 16 ou 17, le substrat se présentant sous forme d'un élément de machine.
